(19) Europäisches Patentamt
European Patent Office
Office européen des brevets

(11)  **EP 3 111 573 B1**

(12)  **FASCICULE DE BREVET EUROPEEN**

(45) Date de publication et mention
de la délivrance du brevet:
**20.12.2017 Bulletin 2017/51**

(21) Numéro de dépôt: **15704253.2**

(22) Date de dépôt: **03.02.2015**

(51) Int Cl.:
*H04B 17/00* (2015.01)        *H04W 24/06* (2009.01)

(86) Numéro de dépôt international:
**PCT/EP2015/052200**

(87) Numéro de publication internationale:
**WO 2015/124422 (27.08.2015 Gazette 2015/34)**

(54) **PROCÉDÉ ET SYSTÈME DE TEST DE STATIONS DE BASE D'UN RÉSEAU DE TÉLÉCOMMUNICATIONS MOBILES, PRENANT EN COMPTE LES INTERFERENCES ENTRE DEUX CELLULES ADJACENTES**

VERFAHREN UND SYSTEM ZUR PRÜFUNG VON BASISSTATIONEN IN EINEM MOBILTELEKOMMUNIKATIONSNETZWERK, UNTER BERÜCKSICHTIGUNG DER INTERFERENZ ZWISCHEN ZWEI BENACHBARTEN ZELLEN

METHOD AND SYSTEM FOR TESTING BASE STATIONS OF A MOBILE TELECOMMUNICATIONS NETWORK, TAKING INTO ACCOUNT INTERFERENCE BETWEEN TWO ADJACENT CELLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.02.2014  FR 1451435**

(43) Date de publication de la demande:
**04.01.2017 Bulletin 2017/01**

(73) Titulaire: **Ercom Engineering Réseaux Communications**
**78140 Vélizy-Villacoublay (FR)**

(72) Inventeurs:
• **HAMON, François**
**F-13007 Marseille (FR)**
• **JIANG, Yiqi**
**F-13008 Marseille (FR)**
• **DEMANGEL, Fabien**
**F-13001 Marseille (FR)**

(74) Mandataire: **Ipside**
**29, rue de Lisbonne**
**75008 Paris (FR)**

(56) Documents cités:
**EP-A1- 2 330 843     US-A- 5 675 581**

• **VOLKER PAULI ET AL: "Reproducible LTE uplink performance analysis using precomputed interference signals", EURASIP JOURNAL ON ADVANCES IN SIGNAL PROCESSING, 18 septembre 2011 (2011-09-18), XP055127188,**

**Description**

**Domaine de l'invention**

La présente invention se rapporte au domaine des télécommunications.

La présente invention se rapporte plus particulièrement à un procédé et à un système d'émulation de terminaux mobiles afin de tester des stations de base d'un réseau de télécommunications mobiles.

Le procédé selon la présente invention et le système selon la présente invention prennent en compte les interférences entre au moins deux cellules adjacentes.

La présente invention s'applique aux stations de base dénommées « eNodeB » dans le cadre de la quatrième génération de télécommunications mobiles : LTE ou « Long Term Evolution ».

**Etat de la technique**

On connaît dans l'état de la technique la demande PCT N° WO 03/069814 (Dyaptive Systems Incorporated), qui décrit un simulateur pour terminaux mobiles au sein d'un réseau de télécommunications sans-fil, dans le but de tester les stations de bases.

L'effet de la vitesse Doppler sur la dégradation du SINR (*Signal to Interference plus Noise Ratio*) a été abordé dans la publication suivante :

[1] M. Speth, S. Fechtel, G. Fock, H. Meyr, "Optimum Receiver Design for Wireless Broadband Systems Using OFDM - Part 1", IEEE transactions on communications, vol. 47, no. 11, Nov. 1999
L'effet du canal multi-trajets sur la compression du SINR a été abordé dans les publications suivantes :
[2] E. Tuomaala and H. Wang, "Effective SINR approach of link to system mapping in OFDM/multi-carrier mobile network", in Mobile Technology, Application and Systems, 2005 2nd International Conference on, Nov. 2005
[3] X. He, K. Niu, Z.He, and J. Lin, "Link Layer Abstraction in MIMOOFDM System," in Proc. International Workshop on Cross Layer Design, 2007
[4] R. Sandanalakshmi, T. Palanivelu, and K. Manivannan, "Effective SNR Mapping for Link Error Prediction in OFDM based Systems," in Proc. IET-UK International Conference on Information and Communication Technology in Electrical Sciences ICTES, 2007

On connaît également dans l'état de la technique la norme de télécommunications mobiles 3GPP, notamment les passages suivants de la norme : TS 25.141 V10.7.0 et TS 25.142 V10.4.0.

L'art antérieur connaît également, par la demande de brevet français N° FR 13 50050 (ERCOM) déposée le 4 janvier 2013, un procédé et système de test de stations de base d'un réseau de télécommunications mobiles.

On connaît également dans l'état de la technique la demande de brevet européen N° EP 2 330 843 A1, qui se rapporte à un dispositif et à un procédé pour fournir un signal de commande.

On connaît également dans l'état de la technique le brevet américain N° US 5 675 581, qui se rapporte à un procédé et à un dispositif pour simuler des interférences de signal au sein d'un système de communication, tels que des systèmes de communication sans-fil ou cellulaires.

On connaît également dans l'état de la technique la publication suivante : « Reproducible LTE uplink performance analysis using precomputed interference signals » (Volker Pauli et al. - EURASIP Journal of advances in signal processing, 18 septembre 2011).

Les interférences entre deux ou plusieurs cellules adjacentes sont particulièrement problématiques dans un environnement LTE, dans la mesure où ce dernier est monofréquence et massivement hétérogène.

**Exposé de l'invention**

La présente invention entend remédier aux inconvénients de l'art antérieur en proposant un procédé de test de stations de base d'un réseau de télécommunications mobiles qui prend en compte les interférences entre au moins deux cellules adjacentes.

La présente invention permet de rendre compte sur une ou plusieurs cellule(s) sous test du niveau d'interférence générée par une ou plusieurs cellule(s) adjacente(s).

L'invention est définie par les revendications indépendantes. A cet effet, la présente invention concerne, dans son acception la plus générale, un procédé de test en laboratoire de stations de base d'un réseau de télécommunications mobiles comportant au moins une cellule, caractérisé en ce qu'il comporte les étapes suivantes :

- acquisition de données relatives aux interférences entre les cellules adjacentes dudit réseau de télécommunications mobiles ;

- calcul d'un modèle d'interférences entre deux cellules adjacentes pour l'ensemble du réseau ; et

- fourniture dudit modèle d'interférences à chaque cellule dudit réseau.

Avantageusement, ledit procédé s'applique à des stations de bases de type eNodeB pour des réseaux de type LTE (*Long Term Evolution*).

Selon un mode de réalisation, ledit modèle d'interférences est basé sur les trois paramètres suivants : charge de chaque cellule, emplacements de terminaux mobiles au sein de chaque cellule et un dernier paramètre relatif à l'ordonnancement de « ressource blocs ». Un « ressource bloc » correspond à une ressource radio élémentaire pour recevoir ou transmettre du signal LTE.

Selon une variante, ledit réseau comporte au moins deux cellules connectées en radio.

Selon une autre variante, ledit réseau comporte une cellule unique, et ledit procédé comporte une étape d'émulation de cellules adjacentes.

Selon un mode de réalisation, lesdites stations de base mettent en oeuvre des algorithmes de coordination de type « ICIC » (« *Inter-Cell Interference Cancellation »* en terminologie anglo-saxonne). Dans ce mode de réalisation, le procédé selon la présente invention rend compte de cette coordination dans le modèle d'interférence.

Selon un mode de réalisation, le procédé selon la présente invention prend en compte la position des terminaux mobiles sur les cellules adjacentes pour ajuster le niveau d'interférence en voie ascendante (« *uplink »*) sur chaque ressource bloc.

Selon un mode de réalisation, le procédé selon la présente invention prend en compte la position des terminaux mobiles de la cellule cible pour ajuster le niveau d'interférence en voie descendante (« *downlink »*) sur chaque ressource bloc.

Selon un mode de réalisation, au moins une cellule parmi les cellules adjacentes (eNode B) est émulée. Elle n'est pas physiquement connectée à l'outil de test. Les vecteurs Gamma DL (« *downlink »* ou voie descendante) et UL (« *uplink »* ou voie ascendante) qui caractérisent la statistique d'activité des « *resources blocks »* sont alors émulés en fonction de la charge définie pour lesdites cellule adjacentes.

Selon un autre mode de réalisation, au moins une cellule parmi les cellules adjacentes est physiquement connectée à l'outil de test. Dans ce mode de réalisation, le modèle d'interférence tient compte de l'éventuelle coordination pour la stratégie d'allocation des ressources entre les cellules. Dans ce mode de réalisation, les vecteurs gamma sont mis à jour en temps réel par le système selon la présente invention en mesurant effectivement la probabilité d'allocation de chaque ressource bloc sur chaque cellule.

Selon un mode de mise en oeuvre particulier, ledit procédé met en oeuvre un modèle « downlink » (voie descendante) de prise en compte des interférences, dans lequel le SINR (« *Signal to Interference and Noise Ratio »* en terminologie anglo-saxonne) dépend des « *Ressource Blocks »,* et s'exprime

$$SINR(RB) = \frac{S}{I+N} = \frac{1}{\dfrac{1}{SIR(RB)} + \dfrac{1}{SNR}}$$

de la façon suivante : où

$$SIR(RB) = \frac{RSRP_{j,0}}{\sum \gamma_{DL,i}(RB) \times RSRP_{j,i}}$$

[0025]    , RSRPj,i désignant « *Reference Signal Receive Power »* la puissance reçue par le mobile j depuis la cellule i et $\gamma$ désignant un facteur dépendant de la charge. La cellule indicée « 0 » représente la cellule cible.

$\gamma_{DL,i}(RB)$. exprime pour chaque ressource bloc la probabilité que la cellule i alloue ce ressource bloc. SNR désigne le rapport signal à bruit.

Dans le cas d'une cellule connectée physiquement, cette probabilité est mesurée par le procédé selon la présente invention.

Dans le cas d'une cellule adjacente émulée, cette probabilité est modélisée en fonction de la charge de cette cellule adjacente.

Avantageusement, le SINR calculé est utilisé en entrée d'une fonction de génération d'indicateurs de type

*« downlink channel state indicator »* (CQI, PMI, RI, Ack/Nack ratio) qui seront reportés à l'eNodeB. Cette fonction, qui comporte un étage de compression de SINR, est définie dans la demande de brevet français N° FR 13 50050 (ERCOM).

Selon un mode de réalisation, l'estimation d'activité $\gamma_{DL,i}(RB)$ sur la voie descendante (*"downlink"*) est réalisée à l'aide d'une moyenne glissante, le terme $\gamma$ dépendant des « RB » (« *ressource bloc »*) et étant calculé comme suit :

$$\gamma_{DL}(RB) = (1-\alpha).\gamma_{DL}(RB) + \alpha.\gamma_{DL,observed}(RB)$$

où $\gamma_{DL,observed}(RB)$ est une mesure par RB (« *ressource bloc»*) de la charge instantanée de la cellule, cette mesure étant réalisée en tirant partie du décodage des messages de « *downlink assignments* » transmis par l'eNode B.

Avantageusement, l'estimation d'activité sur la voie ascendante (*"uplink"*) est

$\gamma_{UL}(RB) = (1-\alpha).\gamma_{UL}(RB) + \alpha.\gamma_{UL,oberved}(RB)$ où $\gamma_{UL,observed}(RB)$ est une mesure par RB (« *ressource bloc »*) de la charge instantanée de la cellule, cette mesure étant réalisée en tirant partie du décodage des messages de « *uplink assignments* » transmis par l'eNode B.

De préférence, dans le cadre du modèle « uplink » (voie ascendante), on estime la charge sur des terminaux mobiles dits interférents en considérant uniquement les terminaux mobiles situés dans une zone d'intérêt, tels que :$|RSRP_i - RSRP_0|$<Seuil, i représentant l'indice de la cellule sur lequel le mobile est attaché et 0 l'indice de la cellule interférée.

Selon un mode de réalisation, dans le cas où une cellule interférente n'est pas connectée (cellule émulée), la densité de 1 dans le vecteur $\gamma_{UL}(RB)$ est une fonction croissante de la charge estimée.

Selon une variante, on estime la charge sur des terminaux mobiles dit interférents en considérant uniquement les terminaux mobiles situés dans une zone d'intérêt, tels que :$|RSRP_i - RSRP_0|$<Seuil*,* i représentant l'indice de la cellule sur lequel le mobile est attaché et 0 l'indice de la cellule interférée.

Selon un mode de réalisation, dans le cadre dudit modèle « *uplink »,* on stocke une série de signaux LTE prégénérés de largeur de bande de un « *resource bloc »* et d'une durée supérieure ou égale à 10 TTI (Transmission Time Interval = 1ms), ce signal dit interférent de base étant appliqué de manière additive en fréquence a l'entrée de l'IFFT sur chaque « *resource bloc »* avec une granularité de 1 TTI (1ms), un vecteur d'application du signal interférent dénommé PI étant défini :

$$PI = \gamma_{UL}(RB).I_{max}$$

où $I_{max}$ est la puissance maximale d'interférence générée par un terminal mobile en « *cell edge »*, ce vecteur étant utilisé comme un masque d'application du signal interférent de base sur chacun des resources blocs.

Il y a autant de signaux LTE stockés que de « cell ID » possible.

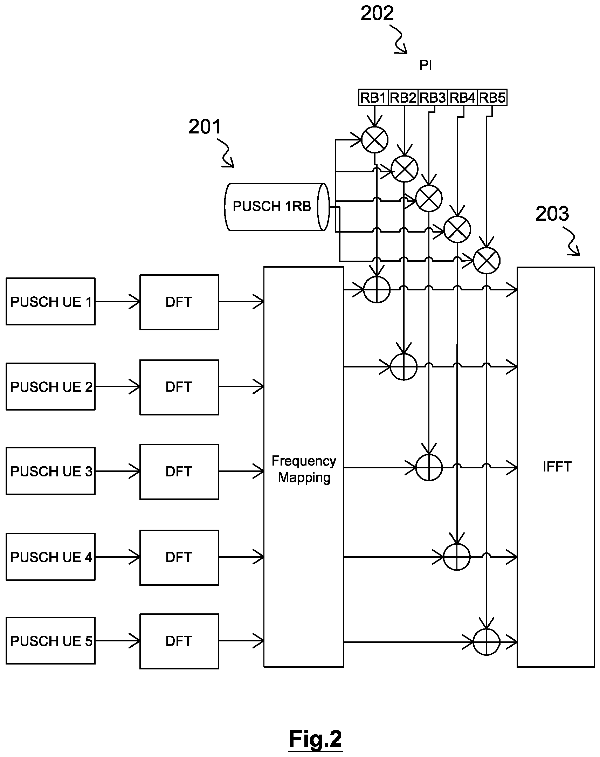

Selon une variante, les différents signaux *« uplink »* des différents terminaux mobiles sont multiplexés en fréquence. Conformément à la figure 2, on applique les termes multiplicatifs du vecteur PI (202) au signal interférant pré-généré. Le signal interférant résultant est ainsi ajouté au signal utile LTE dans le domaine fréquentiel. Une conversion dans le domaine temporelle étant réalisée ensuite.

Avantageusement, ledit procédé est basé sur l'application d'une matrice d'interférence à deux dimensions : temps et fréquence, une matrice d'interférence étant appliquée sur les signaux de la voie ascendante, une autre sur la voie descendante, ledit procédé générant ces matrices d'interférences grâce à un niveau description élevé : positions géographiques des mobiles interférents et interférés, position des sites eNodeB.

La présente invention se rapporte également à un système de test en laboratoire de stations de base d'un réseau de télécommunications mobiles comportant une pluralité de cellules, caractérisé en ce qu'il comporte des moyens pour :

- acquérir des données relatives aux interférences entre les cellules adjacentes dudit réseau de télécommunications mobiles ;

- calculer un modèle d'interférences entre deux cellules adjacentes pour l'ensemble du réseau ; et

- fournir ledit modèle d'interférences à chaque cellule dudit réseau.

## Brève description des dessins

On comprendra mieux l'invention à l'aide de la description, faite ci-après à titre purement explicatif, d'un mode de réalisation de l'invention, en référence aux Figures dans lesquelles :

- la Figure 1 illustre le système selon la présente invention dans un mode de réalisation ;
- la Figure 2 représente le modèle en *« uplink »* (voie ascendante), conformément à la présente invention ; et
- la Figure 3 illustre le système selon la présente invention dans un mode de réalisation.

## Description détaillée des modes de réalisation de l'invention

Le système 100 et le procédé selon la présente invention permettent d'émuler plusieurs centaines de terminaux mobiles 30, 31, 32 compatibles LTE.

Selon l'invention, le procédé permet de tester en laboratoire des stations de base 10, 11, 12 d'un réseau 20 de télécommunications mobiles comportant au moins une cellule 40.

Le procédé selon la présente invention comporte les étapes suivantes :

- acquisition de données relatives aux interférences entre les cellules 40, 41, 42, adjacentes dudit réseau 20 de télécommunications mobiles ;

- calcul d'un modèle d'interférences $M_i$ entre deux cellules adjacentes pour l'ensemble du réseau 20 ; et

- fourniture dudit modèle d'interférences $M_i$ à chaque cellule dudit réseau 20.

Les terminaux mobiles 30, 31, 32 émulés stimulent en charge la station de base 10 : ils émettent des appels, transmettent des données, notamment au moyen d'un protocole de voix sur IP (« VoIP »). La station de base 10 est ainsi stimulée en laboratoire, comme elle le serait en environnement réel.

Le système 100 et le procédé selon la présente invention permettent de simuler :

- un modèle de canal multi-trajets :

- un modèle de propagation (des ondes) ;

- un modèle Doppler (lié à la mobilité).

De plus, le système 100 selon la présente invention permet de modéliser et prendre en compte les interférences entre au moins deux cellules adjacentes.

Le système 100 et le procédé selon la présente invention permettent de représenter un environnement réaliste, prenant en compte la vitesse des terminaux mobiles 30, 31, 32, leur distance à la station de base 10 et l'environnement (bâtiments etc.)

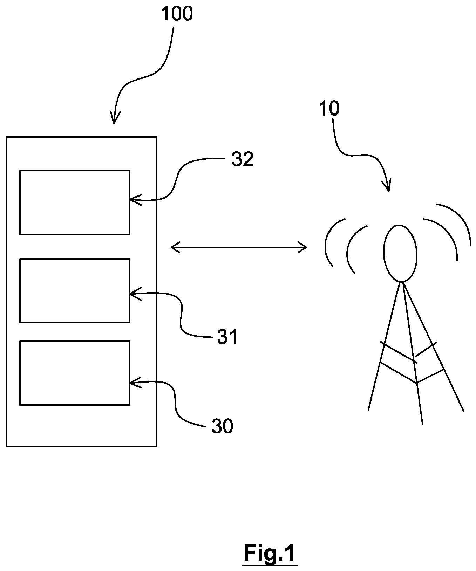

La Figure 1 illustre le système 100 selon la présente invention : une station de base 10 communique avec des terminaux mobiles 30, 31, 32 émulés.

Dans un mode de réalisation, ledit réseau 20 comporte au moins deux cellules 40 et 41. Dans ce cas, on utilise des données mises à jour en temps réel.

Dans un autre mode de réalisation, ledit réseau 20 comporte une cellule 40 unique, et ledit procédé comporte une étape d'émulation de cellules adjacentes. Dans ce cas, on utilise des modèles statistiques.

Dans un mode de réalisation, les cellules adjacentes (eNode B) sont émulées. Elles ne sont pas physiquement connectées à l'outil de test. Les vecteurs Gamma DL (*« downlink »* ou voie descendante) et UL (*« uplink »* ou voie ascendante) qui caractérise la statistique d'activité des resources blocks sont alors émulés en fonction de la charge définie pour lesdites cellules adjacentes.

Dans un autre mode de réalisation, les cellules adjacentes sont physiquement connectées à l'outil de test. Dans ce mode de réalisation, le modèle d'interférence tient compte de l'éventuelle coordination pour la stratégie d'allocation des ressources entre les cellules. Dans ce mode de réalisation, les vecteurs Gamma sont mis à jour en temps réel par le système selon la présente invention en mesurant effectivement la probabilité d'allocation de chaque ressource bloc sur chaque cellule.

Le modèle de l'interférence en lien descendant *« downlink »* fonctionne comme décrit comme suit : on calcule le SINR (*« Signal to Interference and Noise Ratio »* en terminologie anglo-saxonne). En fonction du SINR émulé, un taux de perte de paquets, les estimations de qualités du canal (CQI) sont émulés. Pour cela, on mesure, en fonction de la position d'un terminal mobile, le ratio entre la puissance du signal reçu par la station cible sur la puissance du signal reçu de la cellule interférente.

Dans le modèle « downlink » (voie descendante) au sens de la présente invention, le SINR dépend des « *Ressource Blocks »,* et s'exprime de la façon suivante :

$$SINR(RB) = \frac{S}{I+N} = \frac{1}{\frac{1}{SIR(RB)} + \frac{1}{SNR}}$$

où

$$SIR(RB) = \frac{RSRP_{j,0}}{\sum \gamma_{DL,i}(RB) \times RSRP_{j,i}}$$

$\gamma_{DL,i}(RB)$ exprime la probabilité pour un RB (ressource bloc) d'être alloué par la cellule adjacente i.

RSRPj,i désignant *« Reference Signal Receive Power»* la puissance reçue par le mobile j depuis la cellule i et $\gamma$ désignant un facteur dépendant de la charge. La cellule indicée « 0 » représente la cellule cible.

Le calcul du $\gamma_{DL,i}(RB)$ peut être réalisé à l'aide d'une moyenne glissante

Le terme $\gamma$ dépend des « RB ». Il peut être calculé comme suit :

$$\gamma_{DL}(RB) = (1-\alpha).\gamma_{DL}(RB) + \alpha.\gamma_{DL,observed}(RB)$$

Gamma DL observed(RB) est un booléen qui vaut 1 si le ressource bloc a été alloué par la cellule i ou 0 sinon.. Cette mesure est réalisée en tirant partie du décodage des messages de *« downlink assignments »* transmis par l'eNode B.

C'est un vecteur qui représente l'activité en fréquences en fonction du temps.

Dans le cas ou la cellule interférente n'est pas connectée (cellule émulée) alors la densité de 1 dans le vecteur $y_{DL}(RB)$ est une fonction croissante de la charge estimée sur la cellule interférente.

Dans le modèle « uplink » (voie ascendante) selon l'invention, on estime la charge sur des terminaux mobiles interférents. On considère pour cela que les terminaux mobiles situés dans une zone d'intérêt. On choisit des terminaux mobiles tels que : $|RSRP_i - RSRP_0| <$ *Threshold* et on définit ainsi un jeu de terminaux mobiles interférents.

Les différents signaux *« uplink »* des différents terminaux mobiles sont multiplexés en fréquence. On applique les termes multiplicatifs du vecteur PI (202) au signal interférant pré-généré. Le signal interférant résultant est ainsi ajouté au signal utile LTE dans le domaine fréquentiel. Une conversion dans le domaine temporelle étant réalisée ensuite. Ceci est représenté Figure 2.

L'estimation d'activité sur la voie ascendante (*"uplink"*) est $\gamma UL(RB) = (1-\alpha).\gamma_{UL}(RB) + \alpha.\gamma_{UL,observed}(RB)$ où $\gamma_{UL,observed}(RB)$ est une mesure par RB (resource bloc) de la charge instantanée de la cellule. Cette mesure est réalisée en tirant partie du décodage des messages de *« uplink assignments »* transmis par l'eNode B. Cette mesure est réalisée uniquement sur le jeu de terminaux mobiles interférents tels que définis plus haut. Le vecteur $\gamma_b(RB)$ est dérivé du vecteur $\gamma_{UL}(RB)$ par normalisation.

Dans ce cas, le motif d'interférence $\gamma_b(RB)$ sera le vecteur de probabilité d'ordonnancement, de sorte que

$$\sum_{RB=1}^{RB=n\_RB} \gamma_b(RB) = 1$$ où n_RB est le nombre total de Ressource Blocs disponibles pour la bande passante actuelle.

En référence à la Figure 2, dans le cadre dudit modèle *« uplink »,* on stocke une série de signaux LTE prégénérés de largeur de bande de un *« resource bloc »* et d'une durée supérieure ou égale à 10 TTI 201, ce signal dit interférent de base étant appliqué de manière additive en fréquence a l'entrée de l'IFFT sur chaque *« resource bloc »,* un vecteur d'application du signal interférent dénommé PI 202 étant défini :

$$PI = \gamma_{UL}(RB).I_{max}$$

où $I_{max}$ est la puissance maximale d'interférence générée par un terminal mobile en « *cell edge »,* ce vecteur étant utilisé comme un masque d'application du signal interférent de base sur chacun des resources blocs.

Il y a autant de signaux LTE stockés que de « cell ID » possible.

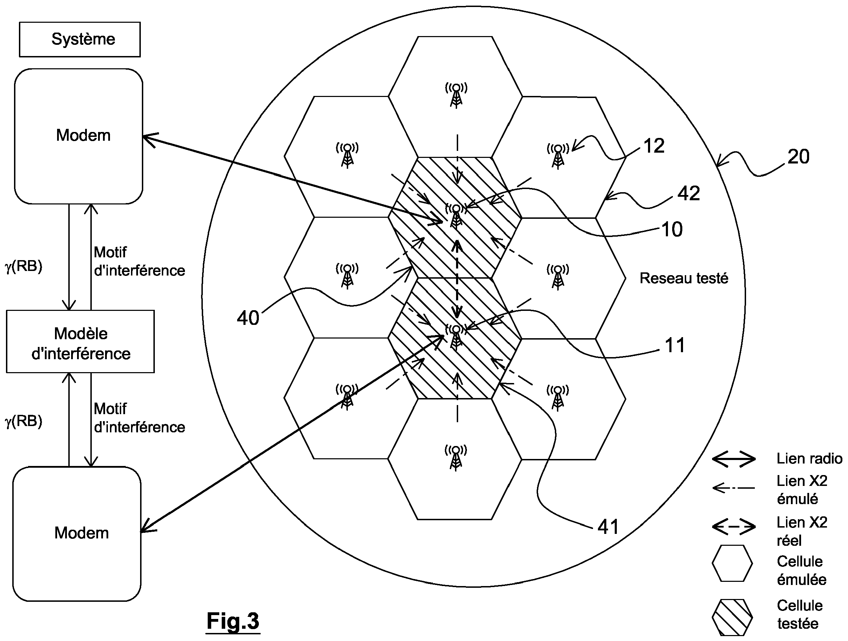

La Figure 3 illustre le système selon la présente invention dans un mode de réalisation.

Dans un mode de réalisation, le procédé selon la présente invention est basé sur l'application d'une matrice d'interférence à deux dimensions : temps et fréquence, une matrice d'interférence étant appliquée sur les signaux de la voie ascendante, une autre sur la voie descendante, ledit procédé générant ces matrices d'interférences grâce à un niveau description élevé : positions géographiques des mobiles interférents et interférés, position des sites eNodeB.

L'invention est décrite dans ce qui précède à titre d'exemple. Il est entendu que l'homme du métier est à même de réaliser différentes variantes de l'invention sans pour autant sortir du cadre du brevet.

**Revendications**

1. Procédé de test en laboratoire de stations de base (10, 11, 12) d'un réseau (20) de télécommunications mobiles comportant au moins une cellule (40, 41, 42), comportant les étapes suivantes :

   • acquisition de données relatives aux interférences entre les cellules (40, 41, 42) adjacentes dudit réseau (20) de télécommunications mobiles, au moins une cellule parmi les cellules adjacentes étant physiquement connectée à l'outil de test ;
   • calcul d'un modèle d'interférences $(M_i)$ entre deux cellules adjacentes pour l'ensemble du réseau (20);
   • fourniture dudit modèle d'interférences $(M_i)$ à chaque cellule dudit réseau (20) par des moyens de connexion d'au moins une station de base (10, 11, 12) ;

   ledit procédé étant **caractérisé en ce que** ledit calcul d'un modèle d'interférences $(M_i)$ entre deux cellules adjacentes pour l'ensemble du réseau (20), tient compte de l'éventuelle coordination pour la stratégie d'allocation des ressources entre les cellules, au moins un vecteur gamma étant mis à jour en temps réel en mesurant effectivement la probabilité d'allocation de chaque ressource bloc sur chaque cellule, le vecteur gamma caractérisant la statistique d'activité des ressources radio élémentaires pour recevoir ou transmettre du signal dudit réseau (20) de télécommunications mobiles.

2. Procédé de test en laboratoire de stations de base (10, 11, 12) d'un réseau (20) de télécommunications mobiles selon la revendication 1, **caractérisé en ce qu'**il s'applique à des stations de bases de type eNodeB pour des réseaux de type LTE (*Long Term Evolution*).

3. Procédé de test en laboratoire de stations de base (10, 11, 12) d'un réseau (20) de télécommunications mobiles selon la revendication 1 ou 2, **caractérisé en ce que** ledit modèle d'interférences $(M_i)$ est basé sur les trois paramètres suivants : charge de chaque cellule (40, 41, 42), emplacements de terminaux mobiles au sein de chaque cellule (40, 41, 42) et un dernier paramètre relatif à l'ordonnancement de « ressource blocs ».

4. Procédé de test en laboratoire de stations de base (10, 11, 12) d'un réseau (20) de télécommunications mobiles selon l'une au moins des revendications précédentes, **caractérisé en ce que** ledit réseau (20) comporte au moins deux cellules (40,41) connectées en radio.

5. Procédé de test en laboratoire de stations de base (10, 11, 12) d'un réseau (20) de télécommunications mobiles selon l'une des revendications 1 à 3, **caractérisé en ce que** ledit réseau (20) comporte une cellule (40) unique, et **en ce que** ledit procédé comporte une étape d'émulation de cellules adjacentes.

6. Procédé de test en laboratoire de stations de base (10, 11, 12) d'un réseau (20) de télécommunications mobiles selon l'une au moins des revendications précédentes, **caractérisé en ce que** lesdites stations de base (10, 11, 12) mettent en oeuvre des algorithmes de coordination de type « ICIC » (« *Inter-Cell Interference Cancellation* » en terminologie anglo-saxonne).

7. Procédé de test en laboratoire de stations de base (10, 11, 12) d'un réseau (20) de télécommunications mobiles selon l'une au moins des revendications précédentes, **caractérisé en ce qu'**il prend en compte la position des terminaux mobiles sur les cellules adjacentes pour ajuster le niveau d'interférence en voie ascendante (*« uplink »*) sur chaque ressource bloc.

8. Procédé de test en laboratoire de stations de base (10, 11, 12) d'un réseau (20) de télécommunications mobiles selon l'une au moins des revendications précédentes, **caractérisé en ce qu'**il prend en compte la position des terminaux mobiles de la cellule cible pour ajuster le niveau d'interférence en voie descendante (« *downlink* ») sur chaque ressource bloc.

9. Procédé de test en laboratoire de stations de base (10, 11, 12) d'un réseau (20) de télécommunications mobiles selon l'une au moins des revendications précédentes, **caractérisé en ce qu'**au moins une cellule parmi les cellules adjacentes (eNode B) est émulée, et n'est pas physiquement connectée à l'outil de test, des vecteurs Gamma, de symbole $\gamma$, DL (« *downlink* » ou voie descendante) et UL (« *uplink* » ou voie ascendante) étant alors émulés en fonction de la charge définie pour lesdites cellules adjacentes.

10. Procédé de test en laboratoire de stations de base (10, 11, 12) d'un réseau (20) de télécommunications mobiles selon l'une au moins des revendications précédentes, **caractérisé en ce qu'**il met en oeuvre un modèle « downlink » (voie descendante) de prise en compte des interférences, dans lequel le SINR *(« Signal to Interference and Noise Ratio* » en terminologie anglo-saxonne) dépend des « *Ressource Blocks* », et s'exprime de la façon suivante :

$$SINR(RB) = \frac{S}{I+N} = \frac{1}{\dfrac{1}{SIR(RB)} + \dfrac{1}{SNR}}$$

où

$$SIR(RB) = \frac{RSRP_{j,0}}{\sum \gamma_{DL,i}(RB) \times RSRP_{j,i}}$$

, RSRPj,i désignant « *Reference Signal Receive Power* » la puissance reçue par le mobile j depuis la cellule i et $\gamma$ désignant un facteur dépendant de la charge, et la cellule indicée « 0 » représentant la cellule cible.

11. Procédé de test en laboratoire de stations de base (10, 11, 12) d'un réseau (20) de télécommunications mobiles selon la revendication 10, **caractérisé en ce que** le SINR calculé est utilisé en entrée d'une fonction de génération d'indicateurs de type « *downlink channel state indicator* » (CQI, PMI, RI, Ack/Nack ratio) qui seront reportés à l'eNodeB.

12. Procédé de test en laboratoire de stations de base (10, 11, 12) d'un réseau (20) de télécommunications mobiles selon l'une au moins des revendications précédentes, **caractérisé en ce que** l'estimation d'activité $\gamma_{DL,i}(RB)$ sur la voie descendante ("*downlink*") est réalisée à l'aide d'une moyenne glissante, le terme $\gamma$ dépendant des « RB » (« *ressource block* ») et étant calculé comme suit :

$$\gamma_{DL}(RB) = (1-\alpha).\gamma_{DL}(RB) + \alpha.\gamma_{DL,observed}(RB)$$

où $\gamma_{DL,odserved}(RB)$ est une mesure par RB *(« ressource bloc »)* de la charge instantanée de la cellule, cette mesure étant réalisée en tirant partie du décodage des messages de « *downlink assignments* » transmis par l'eNode B.

13. Procédé de test en laboratoire de stations de base (10, 11, 12) d'un réseau (20) de télécommunications mobiles selon la revendication 9, **caractérisé en ce que**, dans le cadre du modèle « uplink » (voie ascendante), on estime la charge sur des terminaux mobiles dits interférents en considérant uniquement les terminaux mobiles situés dans une zone d'intérêt, tels que :$|RSRP_i - RSRP_0| < Seuil,$ i représentant l'indice de la cellule sur lequel le mobile est attaché et 0 l'indice de la cellule interférée, et **en ce qu'**on définit ainsi un jeu de terminaux mobiles interférents sur lesquels l'estimation d'activité sur la voie ascendante (*"uplink"*) est
$\gamma_{UL}(RB) = (1-\alpha).\gamma_{UL}(RB) + \alpha.\gamma_{UL,observed}(RB)$ où $\gamma_{UL,observed}(RB)$ est une mesure par RB (« *ressource bloc* ») de la charge instantanée de la cellule, cette mesure étant réalisée en tirant partie du décodage des messages de *« uplink assignments »* transmis par l'eNode B.

14. Procédé de test en laboratoire de stations de base (10, 11, 12) d'un réseau (20) de télécommunications mobiles selon la revendication 9 ou 13, **caractérisé en ce que**, dans le cas où une cellule interférente n'est pas connectée (cellule émulée), la densité de 1 dans le vecteur $\gamma_{UL}(RB)$ est une fonction croissante de la charge estimée.

15. Procédé de test en laboratoire de stations de base (10, 11, 12) d'un réseau (20) de télécommunications mobiles selon la revendication 14, **caractérisé en ce qu'**on estime la charge sur des terminaux mobiles dit interférents en considérant uniquement les terminaux mobiles situés dans une zone d'intérêt, tels que :$|RSRP_i - RSRP_0|$<Seuil, i représentant l'indice de la cellule sur lequel le mobile est attaché et 0 l'indice de la cellule interférée.

16. Procédé de test en laboratoire de stations de base (10, 11, 12) d'un réseau (20) de télécommunications mobiles selon la revendication 9, 13 ou 14, **caractérisé en ce que**, dans le cadre dudit modèle *« uplink »,* on stocke une série de signaux LTE prégénérés de largeur de bande de un « *resource bloc* » et d'une durée supérieure ou égale à 10 TTI (201), ce signal dit interférent de base étant appliqué de manière additive en fréquence a l'entrée de l'IFFT sur chaque *« resource bloc »*, un vecteur d'application du signal interférent dénommé PI (202) étant défini :

$$PI = \gamma_{UL}(RB).I_{max}$$

où $I_{max}$ est la puissance maximale d'interférence générée par un terminal mobile en *« cell edge »*, ce vecteur étant utilisé comme un masque d'application du signal interférent de base sur chacun des resources blocs.

17. Procédé de test en laboratoire de stations de base (10, 11, 12) d'un réseau (20) de télécommunications mobiles selon l'une au moins des revendications précédentes, **caractérisé en ce que** les différents signaux *« uplink »* des différents terminaux mobiles sont multiplexés en fréquence, **en ce qu'**on détermine des facteurs multiplicatifs d'un vecteur PI dépendants de la fréquence et déterminés grâce à la charge, **en ce qu'**on applique les termes multiplicatifs du vecteur PI (202) au signal interférant uplink pré-généré, **en ce qu'**on ajoute le signal interférant résultant au signal utile LTE dans le domaine fréquentiel à la bonne puissance et une conversion dans le domaine temporel étant réalisée ensuite.

18. Procédé de test en laboratoire de stations de base (10, 11, 12) d'un réseau (20) de télécommunications mobiles selon l'une au moins des revendications précédentes, **caractérisé en ce qu'**il est basé sur l'application d'une matrice d'interférence à deux dimensions : temps et fréquence, une matrice d'interférence étant appliquée sur les signaux de la voie ascendante, une autre sur la voie descendante, ledit procédé générant ces matrices d'interférences grâce à un niveau description élevé : positions géographiques des mobiles interférents et interférés, position des sites eNodeB.

19. Système (100) de test en laboratoire de stations de base (10, 11, 12) d'un réseau (20) de télécommunications mobiles comportant une pluralité de cellules (40, 41, 42), **caractérisé en ce qu'**il comporte des moyens pour :

   • acquérir des données relatives aux interférences entre les cellules (40, 41, 42) adjacentes dudit réseau (20) de télécommunications mobiles, au moins une cellule parmi les cellules adjacentes étant physiquement connectée à l'outil de test ;
   • calculer un modèle d'interférences ($M_i$) entre deux cellules adjacentes pour l'ensemble du réseau (20) ;
   • fournir ledit modèle d'interférences ($M_i$) à chaque cellule dudit réseau (20) par des moyens de connexion d'au moins une station de base (10, 11, 12) ;

   ledit système étant **caractérisé en ce que** lesdits moyens pour calculer un modèle d'interférences ($M_i$) entre deux cellules adjacentes pour l'ensemble du réseau (20) tiennent compte de l'éventuelle coordination pour la stratégie d'allocation des ressources entre les cellules, au moins un vecteur gamma étant mis à jour en temps réel en mesurant effectivement la probabilité d'allocation de chaque ressource bloc sur chaque cellule, le vecteur gamma caractérisant la statistique d'activité des ressources radio élémentaires pour recevoir ou transmettre du signal dudit réseau (20) de télécommunications mobiles.

**Patentansprüche**

1. Verfahren zur Laborprüfung von Basisstationen (10, 11, 12) eines Mobilfunknetzes (20) mit mindestens einer Zelle (40, 41, 42), umfassend die folgenden Schritte:

- Erfassen von Daten bezüglich der Interferenzen zwischen den benachbarten Zellen (40, 41, 42) des Mobilfunknetzes (20), wobei mindestens eine Zelle unter den benachbarten Zellen physisch mit einem Prüfinstrument verbunden ist;
- Berechnen eines Interferenzmodells ($M_i$) zwischen zwei benachbarten Zellen für das gesamte Netz (20);
- Bereitstellen des Interferenzmodells ($M_i$) für jede Zelle des Netzes (20) durch Verbindungsmittel mindestens einer Basisstation (10, 11, 12),

wobei das Verfahren **dadurch gekennzeichnet ist, dass** die Berechnung eines Interferenzmodells ($M_i$) zwischen zwei benachbarten Zellen für das gesamte Netz (20) die etwaige Koordination für die Strategie der Zuteilung der Ressourcen zwischen den Zellen berücksichtigt, wobei mindestens ein Vektor Gamma in Echtzeit aktualisiert wird, indem effektiv die Zuteilungswahrscheinlichkeit jedes Ressourcenblocks zu jeder Zelle gemessen wird, wobei der Vektor Gamma die Aktivitätsstatistik der elementaren Funkressourcen beim Empfangen oder Übertragen des Signals des Mobilfunknetzes (20) kennzeichnet.

2. Verfahren zur Laborprüfung von Basisstationen (10, 11, 12) eines Mobilfunknetzes (20) nach Anspruch 1, **dadurch gekennzeichnet, dass** es für Basisstationen vom Typ eNodeB für Netze vom Typ LTE (*Long Term Evolution*) gilt.

3. Verfahren zur Laborprüfung von Basisstationen (10, 11, 12) eines Mobilfunknetzes (20) nach Anspruch 1 oder 2, **dadurch gekennzeichnet, dass** das Interferenzmodell ($M_i$) auf den drei folgenden Parametern beruht: der Last jeder Zelle (40, 41, 42), dem Standort mobiler Endgeräte innerhalb jeder Zelle (40, 41, 42) und einem letzten Parameter bezüglich der Einteilung von "resource blocks".

4. Verfahren zur Laborprüfung von Basisstationen (10, 11, 12) eines Mobilfunknetzes (20) nach mindestens einem der vorhergehenden Ansprüche, **dadurch gekennzeichnet, dass** das Netz (20) mindestens zwei über Funk verbundene Zellen (40, 41) umfasst.

5. Verfahren zur Laborprüfung von Basisstationen (10, 11, 12) eines Mobilfunknetzes (20) nach einem der Ansprüche 1 bis 3, **dadurch gekennzeichnet, dass** das Netz (20) eine einzige Zelle (40) umfasst und dass das Verfahren einen Schritt der Emulation von benachbarten Zellen umfasst.

6. Verfahren zur Laborprüfung von Basisstationen (10, 11, 12) eines Mobilfunknetzes (20) nach mindestens einem der vorhergehenden Ansprüche, **dadurch gekennzeichnet, dass** die Basisstationen (10, 11, 12) Koordinationsalgorithmen vom Typ "ICIC" (*"Inter-Cell Interference Cancellation"* in der englischen Terminologie) einsetzen.

7. Verfahren zur Laborprüfung von Basisstationen (10, 11, 12) eines Mobilfunknetzes (20) nach mindestens einem der vorhergehenden Ansprüche, **dadurch gekennzeichnet, dass** es die Position der mobilen Endgeräte in den benachbarten Zellen berücksichtigt, um das Interferenzniveau im Aufwärtskanal (*"uplink"*) für jeden Ressourcenblock anzupassen.

8. Verfahren zur Laborprüfung von Basisstationen (10, 11, 12) eines Mobilfunknetzes (20) nach mindestens einem der vorhergehenden Ansprüche, **dadurch gekennzeichnet, dass** es die Position der mobilen Endgeräte der Zielzelle berücksichtigt, um das Interferenzniveau im Abwärtskanal (*"downlink"*) für jeden Ressourcenblock anzupassen.

9. Verfahren zur Laborprüfung von Basisstationen (10, 11, 12) eines Mobilfunknetzes (20) nach mindestens einem der vorhergehenden Ansprüche, **dadurch gekennzeichnet, dass** mindestens eine Zelle unter den benachbarten Zellen (eNodeB) emuliert wird und nicht physisch mit dem Prüfinstrument verbunden ist, wobei Vektoren Gamma mit dem Symbol $\gamma$, DL (*"downlink"* oder Abwärtskanal) und UL (*"uplink"* oder Aufwärtskanal) in Abhängigkeit von der für die benachbarten Zellen definierten Last emuliert werden.

10. Verfahren zur Laborprüfung von Basisstationen (10, 11, 12) eines Mobilfunknetzes (20) nach mindestens einem der vorhergehenden Ansprüche, **dadurch gekennzeichnet, dass** es ein "Downlink"-Modell (Abwärtskanal) zur Berücksichtigung der Interferenzen einsetzt, bei dem der SINR (*"Signal to Interference and Noise Ratio"* in der englischen Terminologie) von den *"resource blocks"* abhängt und wie folgt ausgedrückt wird:

$$SINR(RB) = \frac{S}{I+N} = \frac{1}{\frac{1}{SIR(RB)} + \frac{1}{SNR}}$$

mit

$$SIR(RB) = \frac{RSRP_{j,0}}{\sum \gamma_{DL,i}\ (RB)\ x\ RSRP_{j,i}}$$

, wobei RSRPj,i die *"Reference Signal Receive Power"* bezeichnet, die vom Mobilgerät j von der Zelle i empfangene Leistung, und $\gamma$ einen lastabhängigen Faktor bezeichnet und die Zelle mit dem Index "0" die Zielzelle darstellt.

**11.** Verfahren zur Laborprüfung von Basisstationen (10, 11, 12) eines Mobilfunknetzes (20) nach Anspruch 10, **dadurch gekennzeichnet, dass** der berechnete SINR im Eingang einer Funktion zur Erzeugung von Indikatoren vom Typ *"downlink channel state indicator"* (CQI, PMI, RI, Ack/Nack ratio) verwendet wird, die an den eNodeB übertragen werden.

**12.** Verfahren zur Laborprüfung von Basisstationen (10, 11, 12) eines Mobilfunknetzes (20) nach mindestens einem der vorhergehenden Ansprüche, **dadurch gekennzeichnet, dass** die Aktivitätsschätzung $\gamma_{DL,i}$(RB) im Abwärtskanal (*"downlink"*) mithilfe eines gleitenden Mittelwerts erfolgt, wobei der Term $\gamma$ von den "RB" (*"resource blocks"*) abhängt und wie folgt berechnet wird:

$$\gamma_{DL}(RB) = (1 - \alpha).\gamma_{DL}(RB) + \alpha.\gamma_{DL,observed}(RB)$$

wobei $\gamma_{DL,observed}$(RB) eine Messung durch RB (*"resource block"*) der momentanen Last der Zelle ist, wobei diese Messung ausgeführt wird, indem die Decodierung der vom eNodeB übertragenen Nachricht *"downlink assignments"* genutzt wird.

**13.** Verfahren zur Laborprüfung von Basisstationen (10, 11, 12) eines Mobilfunknetzes (20) nach Anspruch 9, **dadurch gekennzeichnet, dass**, im Rahmen des Modells "uplink" (Aufwärtskanal) die Last an den sogenannten interferierenden mobilen Endgeräten geschätzt wird, wobei nur die sich in einem Bereich von Interesse aufhaltenden mobilen Endgeräte betrachtet werden, so dass gilt: |RSRP$_i$ - RSRP$_0$| < Schwellenwert, wobei i den Index der Zelle darstellt, der das Mobilgerät zugeordnet ist, und 0 den Index der interferierten Zelle, und dadurch, dass somit ein Satz interferierender mobiler Endgeräte definiert wird, für welche die Aktivitätsschätzung auf dem Aufwärtskanal (*"uplink"*) lautet:

$$\gamma_{UL}(RB) = (1 - \alpha).\gamma_{DL}(RB) + \alpha.\gamma_{DL,observed}(RB),$$

wobei $\gamma_{UL,observed}$(RB) eine Messung durch RB (*"resource block"*) der momentanen Last der Zelle ist, wobei diese Messung ausgeführt wird, indem die Decodierung der vom eNodeB übertragenen Nachrichten *"uplink assignments"* genutzt wird.

**14.** Verfahren zur Laborprüfung von Basisstationen (10, 11, 12) eines Mobilfunknetzes (20) nach Anspruch 9 oder 13, **dadurch gekennzeichnet, dass**, wenn eine interferierende Zelle nicht verbunden ist (emulierte Zelle), die Dichte von 1 im Vektor $\gamma_{UL}$(RB) eine steigende Funktion der geschätzten Last ist.

**15.** Verfahren zur Laborprüfung von Basisstationen (10, 11, 12) eines Mobilfunknetzes (20) nach Anspruch 14, **dadurch gekennzeichnet, dass** die Last an sogenannten interferierenden mobilen Endgeräten geschätzt wird, wobei nur die sich in einem Bereich von Interesse aufhaltenden mobilen Endgeräte betrachtet werden, so dass gilt: |RSRP$_i$ - RSRP$_0$| < Schwellenwert, wobei i den Index der Zelle darstellt, der das Mobilgerät zugeordnet ist, und 0 den Index der interferierten Zelle.

**16.** Verfahren zur Laborprüfung von Basisstationen (10, 11, 12) eines Mobilfunknetzes (20) nach Anspruch 9, 13 oder 14, **dadurch gekennzeichnet, dass** im Rahmen des Modells *"uplink"* eine Reihe von zuvor erzeugten LTE-Signalen mit der Bandbreite eines *"resource block"* und einer Dauer größer als oder gleich 10 TTI (201) gespeichert wird, wobei dieses sogenannte interferierende Basissignal hinsichtlich der Frequenz additiv auf den Eingang des IFFT jedes *"resource block"* angewandt wird, wobei ein Anwendungsvektor des interferierenden Signals namens PI (202) definiert wird:

$$PI = \gamma_{UL}(RB).I_{max}$$

wobei $I_{max}$ die von einem mobilen Endgerät hinsichtlich der *"cell edge"* maximal erzeugte Interferenzleistung ist, wobei dieser Vektor als Anwendungsmaske des interferierenden Basissignals bei jedem der Ressourcenblöcke verwendet wird.

17. Verfahren zur Laborprüfung von Basisstationen (10, 11, 12) eines Mobilfunknetzes (20) nach mindestens einem der vorhergehenden Ansprüche, **dadurch gekennzeichnet, dass** die verschiedenen *"Uplink"-Signale* der verschiedenen mobilen Endgeräte frequenzgemultiplext sind, dass multiplikative Faktoren eines Vektors PI bestimmt werden, die von der Frequenz abhängig sind und dank der Last bestimmt werden, dass die multiplikativen Terme des Vektors PI (202) auf das zuvor erzeugte interferierende Uplink-Signal angewandt werden, dass das resultierende interferierende Signal zum LTE-Nutzsignal im Frequenzbereich mit der richtigen Leistung hinzugefügt wird, wobei anschließend eine Umwandlung im Zeitbereich ausgeführt wird.

18. Verfahren zur Laborprüfung von Basisstationen (10, 11, 12) eines Mobilfunknetzes (20) nach mindestens einem der vorhergehenden Ansprüche, **dadurch gekennzeichnet, dass** es auf der Anwendung einer Interferenzmatrix mit zwei Dimensionen, Zeit und Frequenz, beruht, wobei eine Interferenzmatrix auf die Signale des Aufwärtskanals und eine weitere auf den Abwärtskanal angewandt wird, wobei das Verfahren diese Interferenzmatrizen dank eines hohen Beschreibungsniveaus erzeugt: geografische Positionen der interferierenden und interferierten Mobilgeräte, Position der eNodeB-Standorte.

19. System (100) zur Laborprüfung von Basisstationen (10, 11, 12) eines Mobilfunknetzes (20) mit einer Vielzahl von Zellen (40, 41, 42), **dadurch gekennzeichnet, dass** es Mittel umfasst, um:

   • Daten bezüglich der Interferenzen zwischen den benachbarten Zellen (40, 41, 42) des Mobilfunknetzes (20) zu erfassen, wobei mindestens eine Zelle unter den benachbarten Zellen physisch mit dem Prüfinstrument verbunden ist;
   • ein Interferenzmodell ($M_i$) zwischen zwei benachbarten Zellen für das gesamte Netz (20) zu berechnen;
   • das Interferenzmodell ($M_i$) jeder Zelle des Netzes (20) durch Verbindungsmittel mindestens einer Basisstation (10, 11, 12) bereitzustellen,

   wobei das System **dadurch gekennzeichnet ist, dass** die Mittel zum Berechnen eines Interferenzmodells ($M_i$) zwischen zwei benachbarten Zellen für das gesamte Netz (20) die etwaige Koordination für die Strategie der Zuteilung der Ressourcen zwischen den Zellen berücksichtigt, wobei mindestens ein Vektor Gamma in Echtzeit aktualisiert wird, indem effektiv die Zuteilungswahrscheinlichkeit jedes Ressourcenblocks zu jeder Zelle gemessen wird, wobei der Vektor Gamma die Aktivitätsstatistik der elementaren Funkressourcen beim Empfangen oder Übertragen des Signals des Mobilfunknetzes (20) kennzeichnet.

## Claims

1. Method for the laboratory testing of base stations (10, 11, 12) of a mobile telecommunications network (20) comprising at least one cell (40, 41, 42), comprising the following steps:

   • acquiring data relating to the interference between the adjacent cells (40, 41, 42) of said mobile telecommunications network (20), at least one cell from the adjacent cells being physically connected to the test tool;
   • calculating an interference model ($M_i$) between two adjacent cells for the whole network (20);
   • providing said interference model ($M_i$) to each cell of said network (20) using connection means of at least one base station (10, 11, 12);

   said method being **characterized in that** said calculation of an interference model ($M_i$) between two adjacent cells for the whole network (20) takes account of the possible coordination for the strategy of allocating resources between the cells, at least one vector gamma being updated in real time by effectively measuring the probability of allocation of each resource block on each cell, the vector gamma characterizing the statistic of activity of the basic radio resources for receiving or transmitting the signal of said mobile telecommunications network (20).

**2.** Method for the laboratory testing of base stations (10, 11, 12) of a mobile telecommunications network (20) according to Claim 1, **characterized in that** it applies to base stations of eNodeB type for networks of LTE (Long Term Evolution) type.

**3.** Method for the laboratory testing of base stations (10, 11, 12) of a mobile telecommunications network (20) according to Claim 1 or 2, **characterized in that** said interference model (M$_i$) is based on the following three parameters: load of each cell (40, 41, 42), locations of mobile terminals within each cell (40, 41, 42) and a last parameter relating to the scheduling of resource blocks.

**4.** Method for the laboratory testing of base stations (10, 11, 12) of a mobile telecommunications network (20) according to at least one of the preceding claims, **characterized in that** said network (20) comprises at least two radio-connected cells (40, 41).

**5.** Method for the laboratory testing of base stations (10, 11, 12) of a mobile telecommunications network (20) according to one of Claims 1 to 3, **characterized in that** said network (20) comprises a single cell (40), and **in that** said method comprises a step of emulating adjacent cells.

**6.** Method for the laboratory testing of base stations (10, 11, 12) of a mobile telecommunications network (20) according to at least one of the preceding claims, **characterized in that** said base stations (10, 11, 12) implement coordination algorithms of ICIC (Inter-Cell Interference Cancellation) type.

**7.** Method for the laboratory testing of base stations (10, 11, 12) of a mobile telecommunications network (20) according to at least one of the preceding claims, **characterized in that** it takes into account the position of the mobile terminals in the adjacent cells in order to adjust the level of uplink interference on each resource block.

**8.** Method for the laboratory testing of base stations (10, 11, 12) of a mobile telecommunications network (20) according to at least one of the preceding claims, **characterized in that** it takes into account the position of the mobile terminals of the target cell in order to adjust the level of downlink interference on each resource block.

**9.** Method for the laboratory testing of base stations (10, 11, 12) of a mobile telecommunications network (20) according to at least one of the preceding claims, **characterized in that** at least one cell from the adjacent cells (eNodeB) is emulated, and is not physically connected to the test tool, vector gammas, with the symbol $\gamma$, DL (downlink) and UL (uplink) then being emulated depending on the load defined for said adjacent cells.

**10.** Method for the laboratory testing of base stations (10, 11, 12) of a mobile telecommunications network (20) according to at least one of the preceding claims, **characterized in that** it implements a downlink model for taking into account interference, wherein the SINR (Signal to Interference and Noise Ratio) depends on the resource blocks, and is expressed as follows:

$$SINR(RB) = \frac{S}{I+N} = \frac{1}{\frac{1}{SIR(RB)} + \frac{1}{SNR}}$$

where

$$SIR(RB) = \frac{RSRP_{j,0}}{\sum \gamma_{DL,i}(RB) \times RSRP_{j,i}}$$

RSRPj,i denoting Reference Signal Receive Power, the power received by the mobile j from the cell i, and $\gamma$ denoting a factor dependent on the load, and the cell indexed '0' representing the target cell.

**11.** Method for the laboratory testing of base stations (10, 11, 12) of a mobile telecommunications network (20) according to Claim 10, **characterized in that** the calculated SINR is used as input of a function for generating indicators of downlink channel state indicator type (CQI, PMI, RI, Ack/Nack ratio) that will be fed to the eNodeB.

**12.** Method for the laboratory testing of base stations (10, 11, 12) of a mobile telecommunications network (20) according to at least one of the preceding claims, **characterized in that** the estimation of activity $\gamma_{DL,i}(RB)$ on the downlink is carried out with the aid of a moving average, the term $\gamma$ depending on the RB (resource blocks) and being calculated as follows:

$$\gamma_{DL}(RB) = (1-\alpha).\gamma_{DL}(RB) + \alpha.\gamma_{DL,observed}(RB)$$

where $\gamma_{DL,observed}(RB)$ is a measurement, per RB (resource block), of the instantaneous load of the cell, this measurement being carried out by exploiting the decoding of the downlink assignment messages transmitted by the eNodeB.

**13.** Method for the laboratory testing of base stations (10, 11, 12) of a mobile telecommunications network (20) according to Claim 9, **characterized in that**, in the context of the uplink model, the load on what are termed interfering mobile terminals is estimated considering only those mobile terminals that are situated in a zone of interest, such that: $|RSRP_i\text{-}RSRP_0|$ <Threshold, i representing the index of the cell with which the mobile is associated and 0 the index of the cell subjected to interference, and **in that** a set of interfering mobile terminals is thus defined, on which terminals the estimation of activity on the uplink is

$$\gamma_{UL}(RB) = (1-\alpha).\gamma_{UL}(RB) + \alpha.\gamma_{UL,observed}(RB) \;,$$

where $\gamma_{UL,observed}(RB)$ is a measurement, per RB (resource block), of the instantaneous load of the cell, this measurement being carried out by exploiting the decoding of the uplink assignment messages transmitted by the eNodeB.

**14.** Method for the laboratory testing of base stations (10, 11, 12) of a mobile telecommunications network (20) according to Claim 9 or 13, **characterized in that**, in the case where an interfering cell is not connected (emulated cell), the density of 1 in the vector $\gamma_{UL}(RB)$ is an increasing function of the estimated load.

**15.** Method for the laboratory testing of base stations (10, 11, 12) of a mobile telecommunications network (20) according to Claim 14, **characterized in that** the load on what are termed interfering mobile terminals is estimated considering only those mobile terminals that are situated in a zone of interest, such that: $|RSRP_i\text{-}RSRP_0|$<threshold, i representing the index of the cell with which the mobile is associated and 0 the index of the cell subjected to interference.

**16.** Method for the laboratory testing of base stations (10, 11, 12) of a mobile telecommunications network (20) according to Claim 9, 13 or 14, **characterized in that**, in the context of said uplink model, a series of pregenerated LTE signals with a bandwidth of one resource block and with a duration of greater than or equal to 10 TTI (201) is stored, this so-called interfering base signal being applied additively in terms of frequency to the input of the IFFT on each resource block, an application vector of the interfering signal, denoted PI (202), being defined as:

$$PI = \gamma_{UL}(RB).I_{max}$$

where $I_{max}$ is the maximum interference power generated by a mobile terminal at the cell edge, this vector being used as a mask for applying the interfering base signal to each of the resource blocks.

**17.** Method for the laboratory testing of base stations (10, 11, 12) of a mobile telecommunications network (20) according to at least one of the preceding claims, **characterized in that** the various uplink signals of the various mobile terminals are frequency-multiplexed, and **in that** multiplicative factors of a vector PI that are dependent on the frequency and determined by virtue of the load are determined, and **in that** the multiplicative terms of the vector PI (202) are applied to the pregenerated uplink interfering signal, **in that** the resulting interfering signal is added to the useful LTE signal in the frequency domain at the correct power and a conversion in the temporal domain is then carried out.

**18.** Method for the laboratory testing of base stations (10, 11, 12) of a mobile telecommunications network (20) according to at least one of the preceding claims, **characterized in that** it is based on the application of a two-dimensional interference matrix: time and frequency, one interference matrix being applied to the uplink signals, another to the downlink, said method generating these interference matrices by virtue of a high description level: geographical positions of the interfering mobiles and those subjected to interference, position of the eNodeB sites.

19. System (100) for the laboratory testing of base stations (10, 11, 12) of a mobile telecommunications network (20) comprising a plurality of cells (40, 41, 42), **characterized in that** it comprises means for:

• acquiring data relating to the interference between the adjacent cells (40, 41, 42) of said mobile telecommunications network (20), at least one cell from the adjacent cells being physically connected to the test tool;
• calculating an interference model ($M_i$) between two adjacent cells for the whole network (20);
• providing said interference model ($M_i$) to each cell of said network (20) using connection means of at least one base station (10, 11, 12);

said system being **characterized in that** said means for calculating an interference model ($M_i$) between two adjacent cells for the whole network (20) take account of the possible coordination for the strategy of allocating resources between the cells, at least one vector gamma being updated in real time by effectively measuring the probability of allocation of each resource block on each cell, the vector gamma characterizing the statistic of activity of the basic radio resources for receiving or transmitting the signal of said mobile telecommunications network (20).

100

32

31

30

10

**Fig.1**

**Fig.2**

**Fig.3**

Système

Modem

$\gamma$(RB)

Motif
d'interférence

Modèle
d'interférence

$\gamma$(RB)

Motif
d'interférence

Modem

20

12

42

10

Reseau testé

40

11

41

⟷ Lien radio

←·— Lien X2
émulé

⟨–⟩ Lien X2
réel

⬡ Cellule
émulée

▨ Cellule
testée

EP 3 111 573 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03069814 A
- FR 1350050

- EP 2330843 A1
- US 5675581 A

**Littérature non-brevet citée dans la description**

- **M. SPETH ; S. FECHTEL ; G. FOCK ; H. MEYR.** Optimum Receiver Design for Wireless Broadband Systems Using OFDM. *IEEE transactions on communications,* Novembre 1999, vol. 47 (11
- **E. TUOMAALA ; H. WANG.** Effective SINR approach of link to system mapping in OFDM/multi-carrier mobile network. *Mobile Technology, Application and Systems, 2005 2nd International Conference,* Novembre 2005
- **X. HE ; K. NIU ; Z.HE ; J. LIN.** Link Layer Abstraction in MIMOOFDM System. *Proc. International Workshop on Cross Layer Design,* 2007

- **R. SANDANALAKSHMI ; T. PALANIVELU ; K. MANIVANNAN.** Effective SNR Mapping for Link Error Prediction in OFDM based Systems. *Proc. IET-UK International Conference on Information and Communication Technology in Electrical Sciences ICTES,* 2007
- **VOLKER PAULI et al.** Reproducible LTE uplink performance analysis using precomputed interference signals. *EURASIP Journal of advances in signal processing,* 18 Septembre 2011